# EUROPEAN PATENT APPLICATION

(11) **EP 2 608 130 A1**
(43) Date of publication of application: **26.06.2013**
(21) Application number: 11306757.3
(22) Date of filing: 22.12.2011
(51) Int. Cl.: G06Q 10/08

(54) **Order identifiers**

(71) Applicant: FRANCE TELECOM, 75015 Paris (FR)
(72) Inventor: Aranda Quiros, Santiago, 142, 13-2 Barcelona (ES)

(57) **Abstract**

The invention relates to a method comprising:
- placing (39) an order by a customer in a web shop,
- generating (31) a sequential order number for said order,
- generating (33) an order identifier said order identifier being a reversible function of said sequential order number, and
- sending (35) said order identifier to a terminal (25) used by said customer for subsequent display (37) of said order identifier on a screen of said terminal (25).

## Description

### FIELD OF THE PRESENT INVENTION:

The invention relates generally to online shopping and more specifically to generation of order identifiers.

### BACKGROUND OF THE PRESENT INVENTION:

In today's marketplace different types of transactions can be distinguished.

A first type of transaction is one where a buyer and a seller agree on a price for a certain product, the price is paid by the buyer to the seller and the product is immediately handed over to the buyer. Typical examples of such transactions would be the purchase of a croissant in a bakery, a coffee in a cafeteria or a pint of beer in a bar.

A second type of transaction is one where the buyer and the seller agree on a price for a given product, the price is paid by the buyer to the seller but delivery of the product is not immediate. Some time after the product has been paid by the buyer, it is for instance send to him by mail. A typical example of the latter would be the purchase of a book or a DVD in what will be called here a "web shop", that is a shop that operates "on line", via the world wide web (the global computer network also called the "Internet") and that, contrary to a "classical" retail store, has no physical premises which a customer needs to visit in person to select a product and place his order. More information about web shops and the way they operate can be gleaned from US 7,720,720. This document describes a method and system that recommend subsequent purchases based on collected transactional data relating to earlier purchases that have been made by a customer in the past.

When delivery is not immediate, as in the case of a web shop, during the purchase process an order number is generated for a given purchase and communicated to the customer. This order number allows, amongst others, tracking of the product. It also allows the customer of the web shop to prove that he carried out the transaction, in case something goes wrong. For instance, the customer's credit card used for paying the product is charged but the product which reaches the customer is damaged. Or the customer does not receive the ordered item within a reasonable time. Or the customer does not receive the item at all.

A common way to generate those order numbers is in a sequential manner. That is, the order numbers form an increasing sequence starting with the first order which has a low order number, for instance 00001. The order placed next will have a higher order number, for instance 00002. More generally, a customer X placing an order in the web shop will have order number N+1, if his order follows on an order placed by a customer Y who has order number N assigned to his order, assuming that order numbers are increased by 1, each time an order is placed. The sequential order number thus corresponds to the rank of the order.

One reason for attributing order numbers in a sequential manner is that in this way it is possible to process orders from customers in the order in which they arrive in the web shop. This principle, also referred to as "first come, first served", is a usual and generally accepted way to process orders and avoids as much as is possible a scenario in which customer X places his order ("comes") before customer Y but customer Y receives his product (is "served") before customer X, i.e. an unhappy customer, at least in the case of customer X, which is something every business seeks to avoid. The orders are thus treated according to their relative rank in the sequence.

Generating order numbers in a sequential manner (the term "sequential order number" will also be used in this application) has however certain disadvantages. First of all, it is possible to deduce from these sequential order numbers that a web shop has just started their business. This can namely be concluded from the fact that a "relatively low" (for instance in the 00010-00100 range) sequential order number is assigned to a certain order. An owner of a web shop may not want to disclose this type of sensitive information, especially valuable to competitors.

Another disadvantage of using sequential order numbers is that a customer placing at least two orders spaced a certain period of time apart, can deduce the number of orders placed in the web shop (and from this potentially the number of customers of a web shop) over that period. The owner of the web shop may not want to disclose this type of information either.

### SUMMARY OF THE PRESENT INVENTION:

It is an object of the present invention to overcome disadvantages and/or make improvements in the prior art. More in particular it is an object of the invention to provide a method comprising:
- placing an order by a customer in a web shop,
- generating a sequential order number for said order,
- generating an order identifier said order identifier being a reversible function of said sequential order number, and
- sending said order identifier to a terminal used by said customer for subsequent display of said order identifier on a screen of said terminal.

This has the advantage that for an average customer it is impossible to tell from the order identifier whether the web shop just started their business. Order identifiers generated at two different moments provide no clue as to the number of orders placed in the period between those two moments.

According to an embodiment of the invention said reversible function comprises a conversion to binary form of said sequential order number resulting in a first binary number, an XOR operation on said first binary number and a second binary number resulting in a third binary number, a reverse operation on said third binary number resulting in a fourth binary number and a conversion of said fourth binary number in a base 36 number.

These are very simple operations that can be carried out quickly especially by computers.

According to a further embodiment of the invention said fourth binary number is converted to a decimal number and said decimal number is converted to a base 36 number.

This is advantageous because programming languages typically operate with decimal numbers.

According to a further embodiment of the invention said second binary number is chosen at random.

This will advantageously make it even more difficult for a user to establish the rank of his order.

It is a further object of the invention to provide a server comprising a sequential order number generator for generating a sequential order number for an order placed by a customer in a web shop, an order identifier generator for generating an order identifier said order identifier being a reversible function of said sequential order number and a transmitter for sending said order identifier to a terminal used by said customer to place said order.

It is still a further object of the invention to provide a terminal comprising a receiver for receiving an order identifier, said order identifier being a reversible function of a sequential order number generated for an order placed by a customer in a web shop and a screen for displaying said order identifier to said customer.

It is still a further object of the invention to provide a computer program comprising program code means for performing all the steps of anyone of methods disclosed above when said program is run on a computer.

It is still a further object of the invention to provide a computer program product comprising program code means stored on a computer readable medium for performing all the steps of anyone of methods disclosed above when said program product is run on a computer.

It is still a further object of the invention to provide a telecommunications system comprising a server as disclosed above and at least one terminal as disclosed above.

### BRIEF DESCRIPTION OF THE DRAWINGS:

The invention will now be explained in greater detail with reference to the accompanying drawings in which:
Figure 1 represents a screen shot showing a reference generated by a web shop operating in accordance with presently known techniques,
Figure 2 represents a screen shot showing a reference generated by a web shop operating in accordance with the invention,
Figure 3 shows a flow chart detailing the steps of the method according to the invention,
Figure 4 shows a flow chart with the different operations carried out by a function according to the invention, and
Figure 5 shows a system according to the invention.

### DETAILED DESCRIPTION OF THE EMBODIMENTS:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, devices etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present invention.

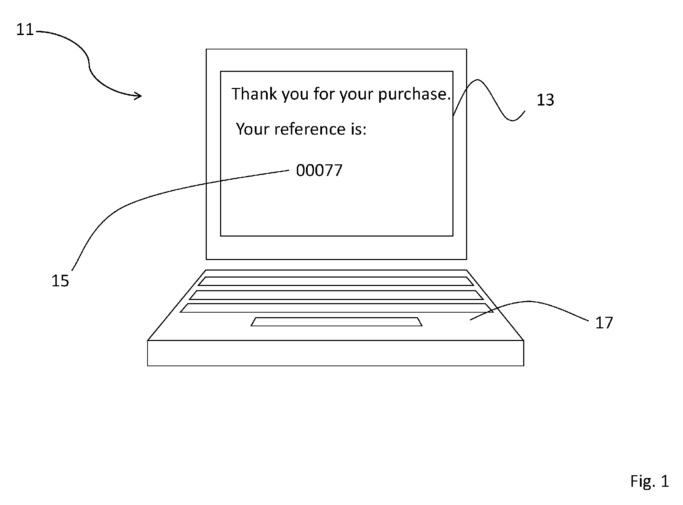

Figure 1 shows a laptop 11. Such a laptop 11 can be used by a customer for on-line buying of certain items, for instance books or DVDs in a web shop. Typically, the customer would use a keyboard or other computer peripheral, e.g. a mouse to visit one or more web shops to evaluate items. Once he decides to place an order and an item has been purchased, a check out screen 13 will be shown to the customer. The check out screen 13 typically displays a sequential order number 15 which should be kept by the customer for future reference. The sequential order number for the ordered item shown in figure 15 is "00077" and, as it is relatively low, the customer can easily deduce from it that the web shop has just started as only 76 items have been ordered. In addition, should the same customer make, after his first buy, a second buy, let's say one day later and should this purchase get a sequential order number "00090", they would be able by doing only a simple straightforward calculation to know that in one day only 00090-00077-1 = 14 items have been sold.

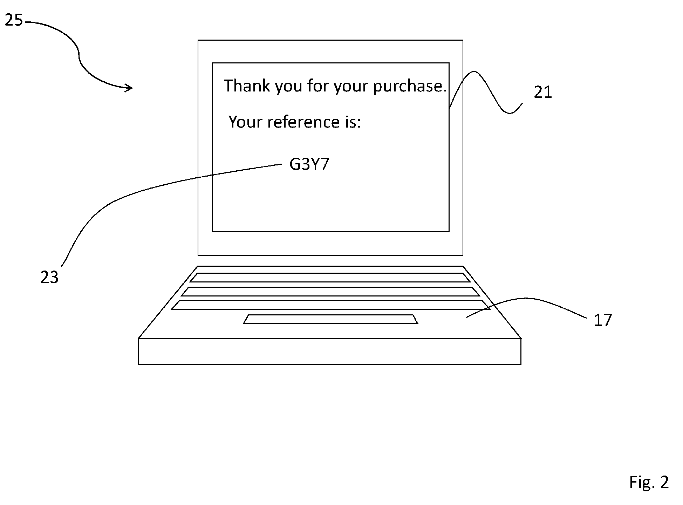

In figure 2 a laptop 25 similar to the laptop 11 of figure 1 is shown. It should however be noted that this laptop can be any terminal that can be used by a customer to place an order in a web shop, for instance a normal desktop computer, a cell phone, a Personal Digital Assistant (also know as "PDA"), a smart phone or a terminal marketed e.g. under the BlackBerry™ brand name. In contrast to figure 1, a check out screen 21 shown in figure 2 displays an order identifier 23 "G3Y7". A next order identifier for instance generated one day later could be "8JRZ". The first thing to note about this order identifier is that for an average customer it is impossible to extract any information relating to how many orders have been placed until his. Secondly, and contrary to the situation described in relation to figure 1, such a customer knowing the two order identifiers "8JRZ" and "G3Y7" will not be able to tell how many orders have been placed in the meantime.

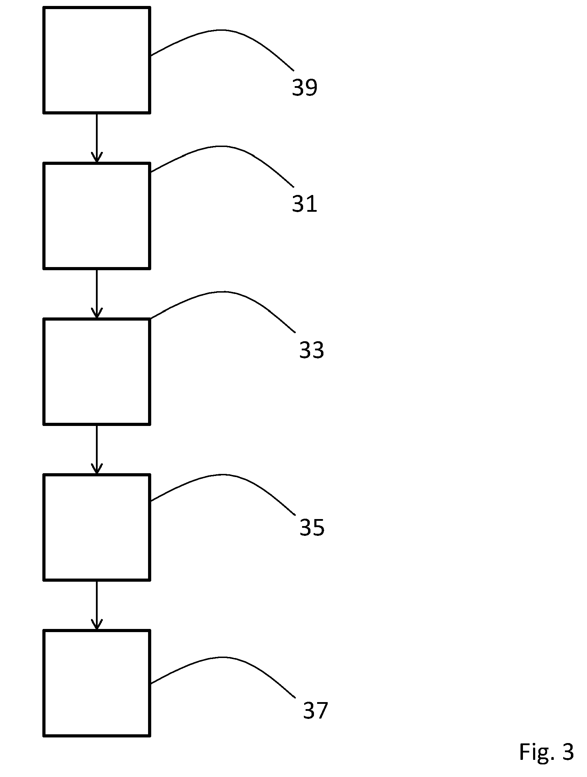

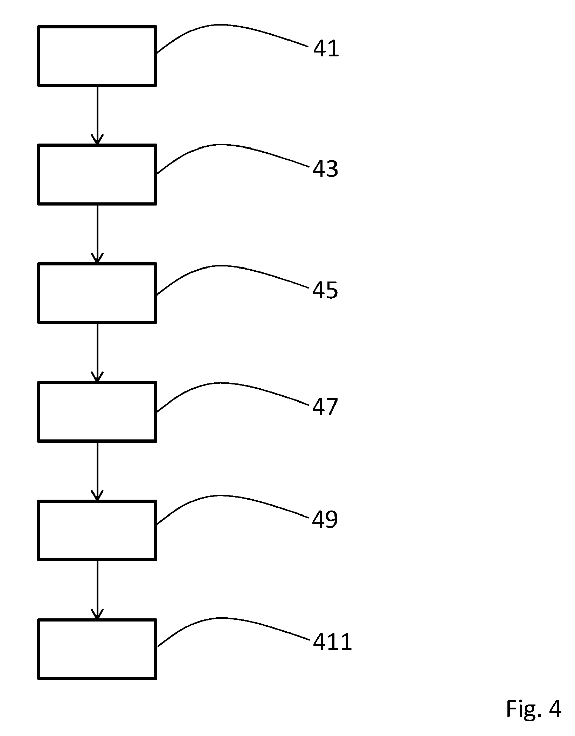

The method according to the invention will be explained in figure 3. This figure shows a flow chart detailing the different steps according to the invention. During a first step 39 a customer places his order in a web shop. During a second step 31 a sequential order number for this order is generated, for instance "274". During a third step 33 an order identifier is generated. This order identifier is a reversible function taking as its input the sequential order number generated in step 31. An example of such a function will be explained below with reference to figure 4. During a fourth step 35, this order identifier is sent to a terminal such as the laptop 25 shown in figure 2. Subsequently during a fifth step 37 the order identifier is displayed on the check out screen 21.

An example of a reversible function will now be explained in figure 4. It should however be noted that any reversible function can be used in this invention. An important feature of such a reversible function is that there is a bijection between its input (the sequential order number) and its output (the order identifier). Another way of saying this would be that the sequential order number and the order identifier have a 1-to-1 relationship. This means that to a given sequential order number corresponds one and only one order identifier and that it is always possible to obtain the sequential order number from a given order identifier and vice versa.

During a first step 41 the sequential order number which is a decimal number (also known as "base 10") is converted to binary form (this is also known as "base 2"). We will use here the sequential order number 274 as an example. Converted to binary form this number will be "00000-00000-01000-10010" (where the digits have been grouped together in groups of five separated by hyphens in order to enhance readability). During a second step 43, an XOR operation is carried out on this binary number. Such an XOR operation is known by a person skilled in the art and its details will not be further explained here. As an example, the XOR operation uses the binary number "11111-11111-11111-11111". However, it should be noted that any other binary number (for example "00100-00001-00010-00011") may be used to carry out the XOR operation. In fact, a binary number chosen at random may be taken as well. It should be noted that a change in this binary number will result in a change in the order identifier which is generated after execution of all the steps according to the invention. The XOR operation results in a third binary number. In the case of the present example, the third binary number would be "11111-11111-10111-01101". A reverse operation is then during a third step 45 carried out on this third binary number. As the person skilled in the art will be aware, a reverse operation carried out on a binary number consists in mirroring the number. That is, the last digit changes places with the first digit, the one-before-last digit changes places with the second digit etcetera. In our example, the reverse operation carried out on "11111-11111-10111-01101" would then result in "10110-11101-11111-11111". During a fourth step 47 this binary number is converted to a decimal number. Such an operation consists in rewriting the binary number in powers of 10. In the present example this would lead to the decimal number "751.651". A decimal number is also known as a base 10 number. During a fifth step 49, the decimal number is rewritten in a base 36 number that is a number which consists of powers of 36. This is done in the following way. From the decimal number (let us call this number X) is subtracted the highest integer number times the highest power of 36 that is possible without leading to a negative number. Let us call this highest integer number Y. The integer rest (let us call this number W) X - (Y times the highest power of 36) is calculated. The same operation is carried out on W (and maybe subsequent integer rests) until the rest equals zero. Taking as X the above determined decimal number "751.651":
751.651 - 16 * (36^3) = 5.119: the power 3 is the highest power of 36, and 16 is the highest integer number times 36^3 which can be subtracted from 751.651 leaving an integer rest. This integer rest is 5.119.
5.119 - 3 3 (36^2) = 1.231: the power 2 is the highest power of 36, and 3 is the highest number times 36^2 which can be subtracted from 5.119. The integer rest is then 1.231.
1.231 - 34 * (36 ^ 1) = 7. The power 1 is the highest power of 36, and 34 is the highest number times 36^1 which can be subtracted from 1.231. The integer rest is then 7.

And 7 minus 7 * (36 ^ 0) finally leads to a rest of 0.

As an aside, it should be noted here that it is actually theoretically possible to skip the conversion to decimal (the fourth step) and go directly form binary to base 36. An advantage of such intermediate operation is however that presently known programming languages operate with decimal numbers. Such an operation can thus be implemented in a relatively easy way. It is however possible to make the division between 10110111011111111111 (751.651 in base 2) and 100100 (36 in base 2). The conversion of the decimal number 751.651 and the decimal number 36 in base 2 representation will not be further explained here as this type of conversion is within the realm of a person skilled in the art.

Going back to our example, the following base 36 number is obtained: "16-3-34-7". Here the hyphens have been added to distinguish this number from a decimal number. During a sixth step 411, the base 36 number is translated to an order identifier using the following translation table:

**Table 1: translation table**

| Decimal/base 10 | Base 36 | | Decimal/base 10 | Base 36 |
|---|---|---|---|---|
| 0 | 0 | | 18 | I |
| 1 | 1 | | 19 | J |
| 2 | 2 | | 20 | K |
| 3 | 3 | | 21 | L |
| 4 | 4 | | 22 | M |
| 5 | 5 | | 23 | N |
| 6 | 6 | | 24 | O |
| 7 | 7 | | 25 | P |
| 8 | 8 | | 26 | Q |
| 9 | 9 | | 27 | R |
| 10 | A | | 28 | S |
| 11 | B | | 29 | T |
| 12 | C | | 30 | U |
| 13 | D | | 31 | V |
| 14 | E | | 32 | W |
| 15 | F | | 33 | X |
| 16 | G | | 34 | Y |
| 17 | H | | 35 | Z |

Translating "16-3-34-7" gives then "G3Y7" as an order identifier.

It should be noted here that it is possible to use a different translation table, for instance, the decimal/base 10 column and the base 36 column could be displaced one row (or more than one row) with respect to each other. In case they are displaced one row, decimal/base 10 "0" would translate to base 36 "Z", decimal/base 10 "1" would translate to base 36 "0" etcetera.

In addition, it would be possible to carry out a permutation of the elements in the base 36 columns and translate the base 10/decimal numbers to base 36 numbers accordingly.

Although for a customer the order identifier would not provide any clue as to the rank of the order, the sequential order number can always be obtained if needed by performing the inverse operations of those explained above. This means that the orders can still be processed according to their rank.

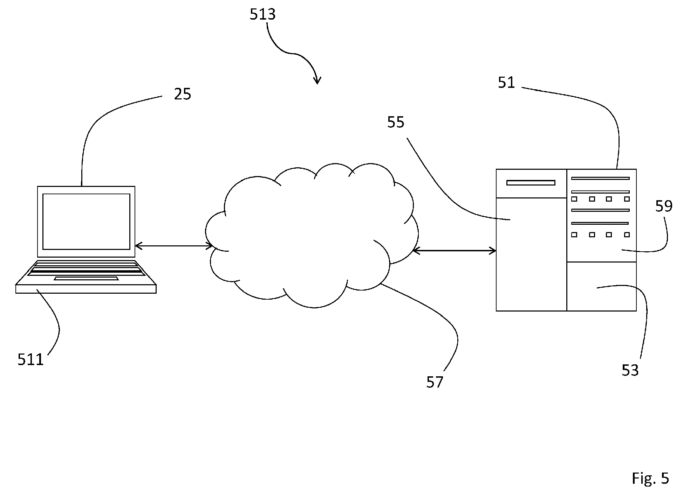

Figure 5 shows a system 513 according to the invention. Such a system comprises a server 51. The server 51 also comprises an online purchase platform, similar for instance to Amazon™ and the likes. The customer proceeding with an order will receive a sequential order number. The server 51 is connected to a computer network 57 for instance the Internet. The server 51 comprises a sequential order number generator 53. This order number generator generates sequential order number for every order placed by a customer. The server 51 also comprises order identifier generator 59 which can generate an order identifier said based on a sequential order number and using the method as described in relation to figure 4. The order identifier is a reversible function of the sequential order number. Finally, the server 51 comprises a transmitter 55 for sending a generated order identifier via a computer network 57 to the laptop 25. To this end, the laptop 25 has some kind of receiver 511 that can receive the order identifier generated by the server 51 and a screen to show the order identifier to the customer.

It should be noted that the web shop can be hosted on the server 51 but the server 51 can also be dedicated exclusively to the generation of order identifiers. In that case, the web shop will be hosted on a different server.

An "order" in the scope of this application is meant to refer to an order for a product (book, DVD) but also to an order for a service (the delivery of a pizza for instance).

## Claims

1. A method comprising:
- placing (39) an order by a customer in a web shop,
- generating (31) a sequential order number for said order,
- generating (33) an order identifier said order identifier being a reversible function of said sequential order number, and
- sending (35) said order identifier to a terminal (25) used by said customer for subsequent display (37) of said order identifier on a screen of said terminal (25).

2. A method according to claim 1 wherein said reversible function comprises a conversion (41) to binary form of said sequential order number resulting in a first binary number, an XOR operation (43) on said first binary number and a second binary number resulting in a third binary number, a reverse operation (45) on said third binary number resulting in a fourth binary number and a conversion of said fourth binary number in a base 36 number.

3. A method according to claim 2 wherein said fourth binary number is converted to a decimal number (47) and said decimal number is converted to a base 36 number (49).

4. A method according to anyone of the claims 2 to 3 wherein said second binary number is chosen at random.

5. A server (51) comprising a sequential order number generator (53) for generating a sequential order number for an order placed by a customer in a web shop, an order identifier generator (59) for generating an order identifier said order identifier being a reversible function of said sequential order number and a transmitter (55) for sending said order identifier to a terminal (25) used by said customer to place said order.

6. A terminal (25) comprising a receiver (511) for receiving an order identifier, said order identifier being a reversible function of a sequential order number generated for an order placed by a customer in a web shop and a screen for displaying said order identifier to said customer.

7. A computer program comprising program code means for performing all the steps of anyone of the claims 1 to 4 when said program is run on a computer.

8. A computer program product comprising program code means stored on a computer readable medium for performing all the steps of anyone of the claims 1 to 4 when said program product is run on a computer.

9. A telecommunications system comprising a server according to claim 5 and at least one terminal according to claim 6.
